# EUROPEAN PATENT APPLICATION

(11) **EP 2 737 937 A1**
(43) Date of publication of application: **04.06.2014**
(21) Application number: 13194592.5
(22) Date of filing: 27.11.2013
(51) Int. Cl.: B01D 53/62, B01D 53/96, C25B 3/04

(54) **Electrolytic reduction of carbon capture solutions**

(30) Priority: 30.11.2012 US 201213690966
(71) Applicant: Alstom Technology Ltd, 5400 Baden (CH)
(72) Inventor: Bedell, Stephen Alan, Knoxville, TN 37934 (US); Bialkowski, Michal Tadeusz, 5417 Untersiggenthal (CH); Pekdemir, Turgay, 5033 Buchs (CH)

(57) **Abstract**

Disclosed herein is a system comprising an absorber; the absorber being operative to extract carbon dioxide from a flue gas stream to form a carbon capture solution that is rich in carbon dioxide; and an electrolytic cell disposed downstream of the absorber; where the electrolytic cell is operative to reduce carbon dioxide present in the carbon capture solution. Disclosed herein too is a method comprising discharging a flue gas stream from a flue gas generator to an absorber; contacting the flue gas stream with a carbon capture solution; extracting carbon dioxide from the flue gas stream to form a carbon dioxide rich carbon capture solution; discharging the carbon dioxide rich carbon capture solution to an electrolytic cell; and reducing the carbon dioxide to a hydrocarbon in the electrolytic cell.

## Description

### TECHNICAL FIELD

This disclosure relates to the reduction of carbon capture solutions. In particular, it relates to the reduction of carbon dioxide in carbon capture solutions.

### BACKGROUND

In the combustion of a fuel (e.g., coal, oil, peat, waste, biofuel, natural gas, or the like) used for the generation of power or for the production of materials such as cement, steel or glass, or the like, a stream of hot flue gas (also sometimes known as process gas) is generated. Such a hot flue gas contains, among other components, carbon dioxide (CO₂).

The negative environmental effects of releasing carbon dioxide to the atmosphere have been recognized, and have resulted in the development of processes adapted for removing or reducing the amount of carbon dioxide from the flue gas streams. Solvents can efficiently remove carbon dioxide as well as other contaminants, such as sulfur dioxide and hydrogen chloride, from a flue gas stream.

There are several methods for capturing carbon dioxide from the flue gas stream. One method involves the use of a solvent to capture carbon dioxide from the flue gas stream. Another method involves the use of chilled ammonia to capture the carbon dioxide.

In the solvent capture system, a flue gas stream is treated with a solvent in an absorber. The solvent absorbs the carbon dioxide from the flue gas stream. The carbon dioxide rich solvent is then discharged into a regenerator, where the carbon dioxide is separated from the solvent. The solvent may be reused for additional carbon dioxide capture from the flue gas stream, thus forming a stream of circulating solvent that circulates between the absorber and the regenerator. The captured carbon dioxide is then purified and pressurized for sequestration.

In the chilled ammonia process, the absorption of carbon dioxide from a flue gas stream is achieved by contacting a chilled ammonia ionic solution with a flue gas stream containing carbon dioxide. This is generally accomplished in a capture system (also termed an "absorber system"). The ionic solution containing absorbed carbon dioxide is subsequently regenerated, whereby carbon dioxide is removed from the ionic solution, and the regenerated ionic solution is reused in the carbon dioxide absorption process. This is generally accomplished in a regeneration system. Thus, a circulating stream of ionic solution is formed, which circulates between the capture system and the regeneration system.

Both of these methods use equipment for separating the carbon dioxide from the carbon dioxide capture solution and further use equipment for pressurizing the carbon dioxide prior to sequestration. This equipment can be expensive. In addition, the sequestration of carbon dioxide results in rendering it inutile.

It is therefore desirable to find other processes that use less expensive equipment and that are less expensive because of not having to regenerate and purify the carbon dioxide. It is also desirable to find other avenues for the use of carbon dioxide instead of just sequestering it.

### SUMMARY

Disclosed herein is a system comprising an absorber; the absorber being operative to extract carbon dioxide from a flue gas stream to form a carbon capture solution that is rich in carbon dioxide; and an electrolytic cell disposed downstream of the absorber; where the electrolytic cell is operative to reduce carbon dioxide present in the carbon capture solution.

Disclosed herein too is a method comprising discharging a flue gas stream from a flue gas generator to an absorber; contacting the flue gas stream with a carbon capture solution; extracting carbon dioxide from the flue gas stream to form a carbon dioxide rich carbon capture solution; discharging the carbon dioxide rich carbon capture solution to an electrolytic cell; and reducing the carbon dioxide in the electrolytic cell.

### BRIEF DESCRIPTION OF THE FIGURES

Figure 1 depicts an exemplary system for reducing carbon dioxide captured from a flue gas stream; and

Figure 2 depicts an exemplary system for reducing carbon dioxide contained in ammonium bicarbonate to methane.

### DETAILED DESCRIPTION

Disclosed herein is a system for reducing the carbon dioxide present in a carbon capture solution. The system advantageously comprises a flue gas generation system that generates a flue gas stream, an absorber for capturing carbon dioxide (from the flue gas stream) in a carbon capture solution and an electrolytic cell for reducing the carbon dioxide contained in the carbon capture solution. The absorber and the electrolytic cell lie downstream of the flue gas generation system and are in fluid communication with one another.

The use of the electrolyte cell for reducing the carbon dioxide minimizes the costs involved with processing carbon dioxide especially when compared with comparative systems that use regenerators (e.g., in the solvent process or in the chilled ammonia process). There is an energy savings by not having to regenerate and purify carbon dioxide from the carbon capture solution. Additionally, this reduction of carbon dioxide facilitates regeneration of the carbon capture solvent and therefore eliminates the need for capital requirements of the carbon capture system regeneration, compression and sequestration processes. The carbon dioxide is also converted to a useful and valuable product (instead of just being sequestered), which can be sold for a profit.

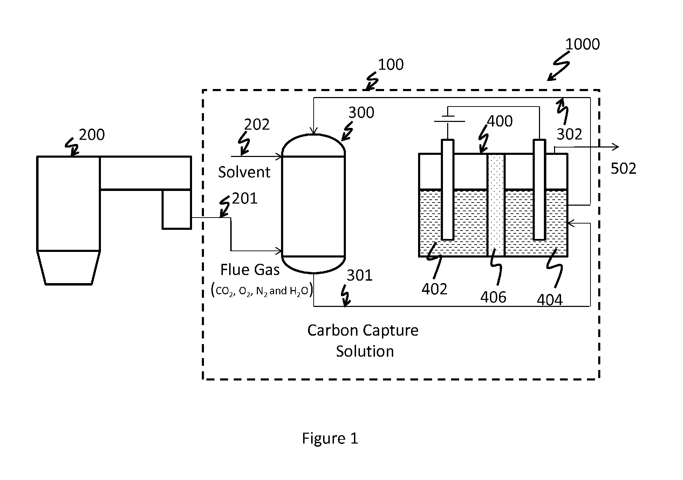

Referring to the Figure 1, a system 1000 for reducing carbon dioxide captured from a flue gas stream comprises a flue gas generation system 200 and a backend system 100. The flue gas generation system 200 generally comprises a furnace (e.g., a boiler) that generates the flue gases that are fed to the backend system 100. The backend system 100 lies downstream of the flue gas generation system 200 and is in fluid communication with it. The flue gases generated by the flue gas generation system 200 comprise particulate matter, carbon dioxide, nitrogen, oxygen and water.

The backend system 100 comprises an absorber 300 in fluid communication with an electrolytic cell 400. The absorber 300 lies upstream of the electrolytic cell. It is to be noted that additional elements not presently depicted in the Figure 1 may be added to the backend system 100. Examples of such additional elements are precipitators (for the removal of particulate matter in the flue gas stream), scrubbers (for removing sulfurous products from the flue gas stream); and the like. These additional elements may also facilitate recycling of the solvent or recycling of the absorbents such as ammonia potassium carbonates, sodium hydroxide, and the like.

In one embodiment, with reference to the Figure 1, a flue gas stream 201 containing carbon dioxide is discharged into the absorber 300 where it is absorbed by a solvent. The solvent facilitates the absorption and the removal of gaseous carbon dioxide from the flue gas stream 201. In one embodiment, the solvent may contain water. The solvent generally comprises a nitrogen-based solvent, and, in particular, primary, secondary or tertiary alkanolamines; primary or secondary amines; sterically hindered amines; and severely sterically hindered secondary aminoether alcohols, or the like, or a combination comprising at least one of the foregoing solvents. Examples of commonly used solvents include monoethanolamine (MEA), diethanolamine (DEA), diisopropanolamine (DIPA), N-methylethanolamine, triethanolamine (TEA), N-methyldiethanolamine (MDEA), piperazine, N-methylpiperazine (MP), N-hydroxyethylpiperazine (HEP), 2-amino-2-methyl-1-propanol (AMP), 2-(2-aminoethoxy)ethanol (also called diethyleneglycolamine or DEGA), 2-(2-tert-butylaminopropoxy)ethanol, 2-(2-tert-butylaminoethoxy)ethanol (TBEE), 2-(2-tert-amylaminoethoxy)ethanol, 2-(2-isopropylaminopropoxy)ethanol, 2-(2-(1-methyl-1-ethylpropylamino)ethoxy)ethanol, or the like, or a combination comprising at least one of the foregoing solvents.

In the absorber 300, the solvent absorbs the carbon dioxide from the flue gas stream to form a carbon dioxide rich solvent stream 301, which is then discharged to the electrolytic cell 400 for reduction of the carbon dioxide.

In another embodiment with reference to the Figure 1, the absorber may use an alkaline solution such as, for example, potassium carbonate, sodium carbonate, sodium hydroxide, and the like, to absorb carbon dioxide from a flue gas stream. In an exemplary embodiment, when the alkaline solution is a carbonate solution that comprises sodium carbonate, the sodium carbonate reacts with carbon dioxide (from the flue gas stream) and water to form a reaction product comprising sodium bicarbonate as shown in the equation (1) below:

Na₂CO₃ (liquid) + CO₂ (gas) + H₂O (liquid) → 2NaHCO₃ (liquid) (1)

where the designation "liquid" alongside sodium carbonate, water and the sodium bicarbonate indicates that the physical state of the reactant or the product is in liquid form and the designation "gas" indicates that the state of the reactant is in gaseous form. While not shown above, potassium carbonate can similarly absorb carbon dioxide to form a potassium bicarbonate reaction product. In a similar manner, a chilled ammonia solution can absorb carbon dioxide to form ammonium carbonate.

The sodium bicarbonate of the equation (1) is in the form of a liquid and exists in the form of a solution with water. However, as the concentration of the of the bicarbonate reaction product increases with respect to the amount of the carbonate solution, it precipitates from the solution to form a solid slurry as shown in the equation (2) below:

2NaHCO₃ (liquid) → 2NaHCO₃ (solid) (2)

where the designations "liquid" and "solid" indicates the respective physical states of the reactant and the product. It is to be noted that while the sodium bicarbonate reaction product is designated as a solid, it is in the form of a solid slurry.

A slurry comprising the carbonate solution and the solid bicarbonate reaction product that is precipitated from solution can be collected at the bottom of the absorber 300. The slurry of the carbonate solution and the bicarbonate reaction product is pumped via a low pressure pump (not shown) and a filter (not shown) to the electrolytic cell 400.

In yet another embodiment, with reference to the Figure 1, the absorber may use a chilled ammonia solution (at temperatures of 2 to 20°C) to absorb carbon dioxide from the flue gas stream 201. Since absorption is effected at low temperatures, the flue gas is first cooled in a direct contact cooler (not shown). The cold flue gas enters the bottom of the absorber 300, while the CO₂-lean stream containing ammonia solution enters the top of it. The CO₂-lean stream is mainly composed of water, ammonia and carbon dioxide. The mass fraction of ammonia in the solvent is typically up to 28 wt%, based on the total weight of the stream. The pressure in the absorber should be close to atmospheric pressure, while the temperature is 0 to 20°C. This low temperature prevents the ammonia from evaporating. The CO₂-lean stream should have a CO₂ loading (the ratio of the number of moles of carbon dioxide and ammonia in their various aqueous forms) in an amount of 0.25 to 0.67, and preferably in an amount of 0.33 to 0.67. A low CO₂ loading in the top of the absorber where the CO₂-lean stream is fed increases the vapor pressure of ammonia.

A CO₂-rich stream leaves the bottom of the absorber. It is composed of a solid phase and a liquid phase (i.e., it is in the form of a slurry). Its CO₂ loading (the ratio of the number of moles of carbon dioxide and ammonia in their various aqueous forms) is in an amount of 0.5 to 1, and preferably in an amount of 0.67 to 1. The CO₂-rich stream is pumped to the electrolytic cell where the carbon dioxide is reduced to form methane or other commercially valuable products.

Different products that include carbon dioxide that can be obtained during the chilled ammonia process are ammonium bicarbonate, ammonium carbonate, ammonium carbamate, sesqui-carbonate and ice (water). The descriptions used here which describe these different CO₂ derived species are not meant to limit this invention to those species. Many of these forms are interconvertible and the mechanism of electrolytic reduction may involve only one of these convertible forms.

The electrolytic cell 400 comprises an anode chamber 402, a cathode chamber 404 with a barrier 406 disposed between the anode chamber 402 and the cathode chamber 404. The barrier 406 is generally an ion exchange membrane. The ion exchange membrane permits the exchange of ions between two electrolytes or between an electrolyte solution and a complex.

The ion exchange membrane is manufactured from an ion exchange resin. The ion exchange resin is an insoluble matrix (or support structure) manufactured from a crosslinked polymer. The material has a highly developed structure of pores on the surface of which are sites that easily trap and release ions. The trapping of ions takes place only with simultaneous releasing of other ions; thus the process is called ion-exchange.

There are multiple different types of ion-exchange resin which are fabricated to selectively prefer one or several different types of ions. In one embodiment, the ion-exchange resins are based on crosslinked polystyrene. The crosslinking is often achieved by adding 0.5 to 25 wt% of divinylbenzene to styrene at the polymerization process. There are four main types of ion exchange resins which differ from each other based on their functional groups: strongly acidic (typically, sulfonic acid groups, e.g. sodium polystyrene sulfonate or polyAMPS); strongly basic, (quaternary amino groups, for example, trimethylammonium groups, e.g. polyAPTAC); weakly acidic (mostly, carboxylic acid groups) and weakly basic (primary, secondary, and/or ternary amino groups, e.g. polyethylene amine). The ion exchange membrane can be an anionic exchange membrane or a cationic exchange membrane. An exemplary membrane is a cationic exchange membrane. An exemplary cationic exchange membrane is a NAFION^{®} membrane.

The carbon capture solution containing a carbon dioxide rich solvent, a carbonate, a bicarbonate, a carbamate, or a combination thereof is discharged into the electrolytic cell 400 where it undergoes electrolysis thereby reducing carbon dioxide to a hydrocarbon. The hydrocarbons may be alkanes (e.g., methane, ethane, propane, and the like) alcohols (e.g., methanol, ethanol, propanol, butanol, and the like), alkylenes (methylene, ethylene, propylene, and the like), or combinations thereof. The hydrocarbons emerge from the electrolytic cell 400 via output stream 502.

Depending upon the carbon capture solution, the electrolytic cell 400 uses different electrolytes in the cathode chamber and in the anode chamber. Examples of anolytes (electrolytes used in the anode chamber) are salts containing anions such as sulfates, nitrates, hydroxides, and the like in combination with cations such as potassium, sodium, ammonium. Acids may also be used as anolytes. Examples of sulfates that can be used as anolytes are ammonium sulfate, sulfuric acid, potassium sulfate, or combinations thereof. The anolyte is generally used in concentrations of 0.5M to 5M, specifically 1M to 4M.

The carbon capture solution is generally the catholyte. Examples of carbon capture solutions are carbonates, bicarbonates, carbamates and the like. Exemplary carbon capture solutions are ammonium carbonate, ammonium bicarbonate, ammonium carbamate, potassium carbonate, potassium bicarbonate, sodium carbonate, sodium bicarbonate, lithium carbonate, lithium bicarbonate, and the like. The carbon capture solutions used as the catholyte are present in concentrations of 0.5M to 4M, specifically 1M to 3M. It is desirable for the catholyte to be in the form of a liquid or a slurry, when it is charged to the electrolyte cell.

In one embodiment, in one method of using the system 1000 of the Figure 1, a flue gas stream 201 generated in the flue gas generator 200 is discharged to the absorber 300 where it is mixed with either a solvent, chilled ammonia solution or an alkaline solution (e.g., sodium hydroxide, potassium hydroxide, and the like) that is also discharged into the absorber via a stream 202. The carbon dioxide from the flue gas stream is absorbed into the solvent, chilled ammonia or alkaline solution to form the carbon capture solution. The carbon capture solution 301 is generally charged to the electrolyte cell 400 as the catholyte. The electrolytic cell can comprise one or two compartments.

An anolyte is introduced into the cell 400. A potential difference is applied between the cathode and the anode. The anolyte and catholyte dissociate into ions. Ions are exchanged across the ion exchange membrane. The carbon dioxide present in the carbon capture solutions is reduced to an alkane, an alcohol or an alkylene. The solvent, chilled ammonia solution or the alkaline solution, now free of carbon dioxide is recycled to the absorber 300 via stream 302.

The system is advantageous in that energy is saved by not using a regenerator. The carbon dioxide is converted into a useful product that can be sold commercially or used in other process to manufacture other valuable products. There is also an energy saving by not having to regenerate and purify the carbon dioxide.

The system is exemplified by the following non-limiting examples.

### Examples

### Example 1

This example was conducted to demonstrate the use of an electrolytic cell to reduce carbon dioxide in a carbon capture solution to methane. The carbon capture solution used in this example is 1M ammonium bicarbonate (NH₄HCO₃). The ammonium bicarbonate is one of the reaction products obtained in the chilled ammonia process when an ammonia solution comprising ammonia and water is used to absorb carbon dioxide from the flue gas stream in the absorber. The ammonium bicarbonate is discharged into an electrolyte cell having an anode chamber and a cathode chamber separated by a cationic exchange membrane. The cell uses ammonium sulfate (NH₄)₂SO₄ as an anolyte. The cationic exchange membrane that divides the electrolytic cell into two compartments is NAFION^{®} commercially available from Ion Power Inc.

This 1M ammonium bicarbonate solution is discharged to the cathode compartment of the electrical cell and serves as the catholyte. The initial anolyte composition is a solution of 3.72 M (40 wt%) (NH₄)₂SO₄. The anode and cathode chambers are separated by a cation exchange membrane, so that for each hydroxyl ion (OH⁻) consumed in the anolyte, an ammonium ion (NH₄⁺) is transferred through the membrane to the catholyte.

The anode reaction (3) is as follows:

H₂O → 1/2O₂ + 2H⁺ + 2e⁻ (3)

The dissociation of the ammonium sulfate into an ammonium ion and a sulfate ion is represented by the reaction (4)

(NH₄)₂SO₄ → 2NH₄⁺ + SO₄⁻ (4)

The cathode materials and conditions are chosen and optimized to produce methane from the CO₂. Hydrogen is produced as byproduct.

The cathode reactions (5) and (6) are as follows:
The ammonium bicarbonate dissociates as follows in the reaction (5)

NH₄⁺ + HCO₃⁻ + 5H₂O + 8e⁻ → CH₄ + 8OH⁻ + NH₃ (5)

The hydroxyl ions from the reaction (6) are transferred across the cationic membrane to the anolyte.

H₂O + e⁻ → 1/2H₂ + OH⁻ (6)

It should be noted that the following reaction (7) will occur with solution from the carbon capture solution process, which will also contain ammonium carbamate.

NH₄⁺ + NH₂CO₂⁻ + 6H₂O + 8e⁻ → CH₄ + 8OH⁻ + 2NH₃ (7)

The transfer of NH₄⁺ to the catholyte and the combination with the produced OH⁻ results in the production of a solution of ammonium hydroxide (NH₄OH) in the anode chamber. The ammonium hydroxide becomes aqueous ammonia. Along with the ammonium hydroxide, methane is also produced, which is the major product from the bicarbonate reduction. The relatively insoluble H₂ and CH₄ (22.4 and 5.6 liters per liter of catholyte processed) are allowed to collect at the top of the solution. The solution is then separated from the produced gases. After running the cell for a time long enough for a 25 wt% conversion of ammonium bicarbonate (based on the initial weight of the ammonium bicarbonate) and with a Faradaic efficiency of 50% the following final compositions are attained.
ANOLYTE: 1.81M (NH)₄SO₄ and 2.10M H₂SO₄
CATHOLYTE: 3.94M NH₃ and 0.74M NH₄HCO₃

The above composition shows that after this processing, the concentration of H⁺ is higher than that of NH₄⁺. At this point, more H⁺ than NH₄⁺ will transfer across the membrane. There is therefore a need to control anolyte composition and flow rates.

Dioxygen (22.4 liters per liter of catholyte processed) is also collected over the anolyte solution.

The appropriate portion of the catholyte solution will be returned to the absorber. Though some of the H₂SO₄ solution from the anolyte bleed could be used to remove small amounts of ammonia in the methane/H₂ stream, most will be mixed with the remaining catholyte to regenerate a fresh anolyte solution. This example illustrates the basics of the reduction and salt balance issues, though it is realized-that it will be best run on a continuous basis. Because of the unequal consumptions of water at the anode and cathodes, water removal or addition will also take place. The heat generated by the mixing of the basic catholyte and acidic anolyte may be recovered by standard techniques. The methane/hydrogen mixture can be separated for further use or fed together in a gas turbine or power generation.

### Example 2

This example was conducted to demonstrate the use of an electrolytic cell to reduce carbon dioxide in a carbon capture solution to methane. The carbon capture solution used in this example is 1M ammonium bicarbonate (NH₄HCO₃). The ammonium bicarbonate is discharged into an electrolyte cell having an anode chamber and a cathode chamber separated by a cationic exchange membrane. The cell uses aqueous H₂SO₄ as an anolyte. The cationic exchange membrane that divides the electrolytic cell into two compartments is NAFION^{®} commercially available from Ion Power Inc.

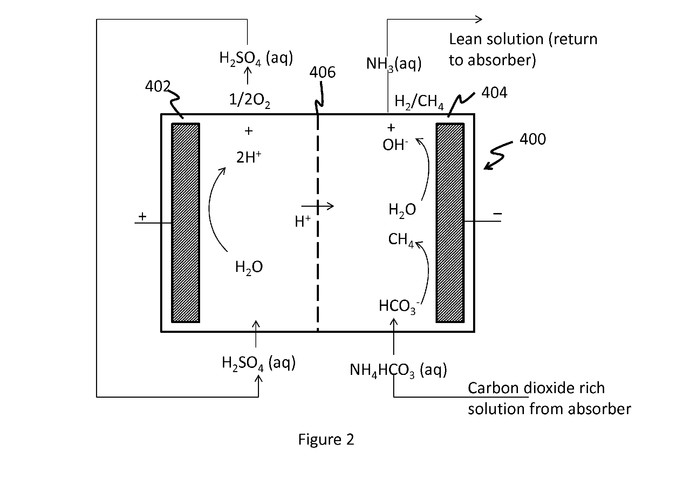

This 1M ammonium bicarbonate solution is discharged to the cathode compartment of the electrical cell and serves as the catholyte. The initial anolyte composition is a solution of 2.0 M H₂SO₄. The anode and cathode chambers are separated by a cation exchange membrane, so that for each hydroxyl ion (OH⁻) consumed in the anolyte, a hydrogen ion H⁺ is transferred through the membrane to the catholyte. The process is represented by the schematic shown in the Figure 2. Figure 2 is an exemplary depiction of the electrolytic cell 400 with the pertinent reactions and byproducts.

The anode reaction (8) are as follows:

H₂O → 1/2O₂ + 2H⁺ + 2e⁻ (8)

The dissociation of sulfuric acid at the anode are shown in the reaction (9) as follows:

H₂SO₄ → 2H⁺ + SO₄⁻

The cathode materials and conditions are optimized to produce methane from the CO₂. Hydrogen is produced as byproduct.

The cathode reactions (9) and (10) are as follows:
The ammonium bicarbonate dissociates as follows in the reaction (9)

NH₄⁺ + HCO₃⁻ + 5H₂O + 8e⁻ → CH₄ + 8OH⁻ + NH₃ (9)

The hydroxyl ions from the reaction (10) are transferred across the cationic membrane to the anolyte.

H₂O + e- → 1/2H₂ + OH⁻ (10)

It should be noted that the following reaction (11) will occur with solution from the carbon capture solution process, which will also contain ammonium carbamate.

NH₄⁺ + NH₂CO₂⁻ + 6H₂O + 8e⁻ → CH₄ + 8OH⁻ + 2NH₃ (11)

The transfer of H⁺ to the catholyte and the combination with the produced OH⁻ at the cathode results in the production of a solution of water. The relatively insoluble H₂ and CH₄ (80.6 and 20.2 liters per liter of catholyte processed) are allowed to collect at the top of the solution. The solution is then separated from the produced gases. After running the cell for a time long enough for a 90 wt% conversion of ammonium bicarbonate (based on the initial weight of the ammonium bicarbonate) and with a Faradaic efficiency of 50% the following final compositions are attained.
ANOLYTE: 2.32 M N₂SO₄
CATHOLYTE: 0.86M NH₃ and 0.10M NH₄HCO₃

Dioxygen (80.6 liters per liter of catholyte processed) is also collected over the anolyte solution.

The catholyte solution will be returned to the absorber. Though some of the H₂SO₄ solution from the anolyte bleed could be used to remove small amounts of ammonia in the methane/H₂ stream, most of it will be used for other purposes (including concentrating the products for sale). This example illustrates the basics of the reduction and salt balance issues, though it is realized-that it will be best run on a continuous basis. Because of the unequal consumptions of water at the anode and cathodes, water removal or addition will also take place. The methane/hydrogen mixture can be separated for further use or fed together in a gas turbine or power generation.

### Example 3

This example demonstrates the use of potassium bicarbonate solution to produce methane with aqueous potassium sulfate as the anolyte in a one compartment cell. The potassium bicarbonate solution is obtained when potassium hydroxide or potassium carbonate are used in the absorber for absorbing the carbon dioxide from the flue gas stream.

IM KHCO₃ is used to represent a rich solution from an aqueous potassium carbonate solution used for scrubbing CO₂ from flue gas that is diverted from being sent for thermal regeneration (during times of excess power). This solution is sent to the electrochemical cell. The cell contains one solution compartment with two electrodes, each of which is sheathed to provide separate pathways for the gases evolved at each electrode to collect. The cell is designed with enough agitation to provide thorough solution mixing, but not to interfere with gas collection. Thus solution products produced at the anode and cathode are free to react with each other. The anode reaction (12) is as follows:

H₂O → ½O₂ + 2H⁺ + 2e⁻ (12)

The cathode materials and conditions have been optimized to produce methane from the CO₂. As in most aqueous electro-reductions it is hard to avoid water reduction to produce hydrogen.

The cathode reactions (13) and (14) are as follows:

HCO₃⁻ + 6H₂O + 8e⁻ → CH₄ + 9OH⁻ (13)

H₂O + e⁻ → ½H₂+OH⁻ (14)

The formation of H⁺ at the anode and OH⁻ at the cathode results in the production of water. The relatively insoluble hydrogen and methane (80.6 and 20.2 liters per liter of carbon capture solution processed) are allowed to collect at the top of the cathode and O₂ (80.6 liters per liter
of the carbon capture solution processed) is allowed to collect at the top of the anode. After running the cell for a time long enough for 90% conversion of bicarbonate and with a Faradaic efficiency of 50% the following final composition is attained.
FINAL SOLUTION COMPOSITION: 0.82M KOH, 0.09M K₂CO₃

The solution from the cell can be returned to the CCS absorber. For reaction of CO₂ to reform a solution of K₂CO₃ and/or KHCO₃. The methane/hydrogen mixture can be separated for further use or fed together in a gas turbine for power generation.

While this disclosure describes exemplary embodiments, it will be understood by those skilled in the art that various changes can be made and equivalents can be substituted for elements thereof without departing from the scope of the disclosed embodiments. In addition, many modifications can be made to adapt a particular situation or material to the teachings of this disclosure without departing from the essential scope thereof. Therefore, it is intended that this disclosure not be limited to the particular embodiment disclosed as the best mode contemplated for carrying out this disclosure.

## Claims

1. A system comprising:
an absorber; the absorber being operative to extract carbon dioxide from a flue gas stream to form a carbon capture solution that is rich in carbon dioxide; and
an electrolytic cell disposed downstream of the absorber; where the electrolytic cell is operative to reduce carbon dioxide present in the carbon capture solution.

2. The system of Claim 1, where the carbon dioxide is reduced to form a hydrocarbon or organic acid.

3. The system of Claim 1, where the carbon capture solution is recycled to the absorber from the electrolytic cell after the reduction of the carbon dioxide.

4. The system of Claim 1, where the carbon capture solution comprises a solvent that absorbs carbon dioxide.

5. The system of Claim 1, where the carbon capture solution comprises a carbonate, a bicarbonate, or a carbamate.

6. The system of Claim 1, where the carbonate is ammonium carbonate, potassium carbonate, sodium carbonate, lithium carbonate, or combinations thereof; the bicarbonate is ammonium bicarbonate, potassium bicarbonate, sodium bicarbonate, lithium bicarbonate, or combinations thereof; and where the carbamate is ammonium carbamate, potassium carbamate, sodium carbamate, or combinations thereof.

7. The system of Claim 1, where the electrolytic cell comprises two chambers separated by an ion exchange membrane.

8. The system of Claim 1, where the carbon capture solution that is rich in carbon dioxide is a catholyte.

9. The system of Claim 1, where the electrolyte cell comprises an ammonium salt, a sodium salt, a potassium salt or a lithium salt as an anolyte.

10. The system of Claim 1, where the electrolyte cell comprises an acid as an anolyte.

11. The system of Claim 1, where the electrolyte cell comprises a single chamber.

12. A method comprising:
discharging a flue gas stream from a flue gas generator to an absorber;
contacting the flue gas stream with a carbon capture solution;
extracting carbon dioxide from the flue gas stream to form a carbon dioxide rich carbon capture solution;
discharging the carbon dioxide rich carbon capture solution to an electrolytic cell; and
reducing the carbon dioxide to a hydrocarbon in the electrolytic cell.

13. The method of Claim 12, where the carbon capture solution comprises a solvent, a chilled ammonia solution or an alkaline solution.

14. The method of Claim 12, further comprising discharging a carbon dioxide lean carbon capture solution to the absorber from the electrolytic cell.

15. The method of Claim 12, where the hydrocarbon is an alkane, an alcohol or an alkylene.
